# EUROPEAN PATENT SPECIFICATION

(11) **EP 3 754 068 B1**
(45) Date of publication and mention of the grant of the patent: **09.02.2022**
(21) Application number: 20179143.1
(22) Date of filing: 10.06.2020
(51) Int. Cl.: D03D 47/27, D03J 1/24

(54) **WEAVING LOOM COMPRISING AN OPTICAL DEVICE FOR MONITORING THE WEAR OF GRIPPER STRAPS AND CONTROL METHOD OF SAID LOOM**
WEBMASCHINE MIT EINER OPTISCHEN VORRICHTUNG ZUR ÜBERWACHUNG DES VERSCHLEISSES VON GREIFERBÄNDERN UND STEUERUNGSVERFAHREN DER WEBMASCHINE
MÉTIER À TISSER COMPRENANT UN DISPOSITIF OPTIQUE POUR LA SURVEILLANCE DE L'USURE DES BANDES À GRIFFES ET PROCÉDÉ DE COMMANDE DE DUDIT MÉTIER

(30) Priority: 18.06.2019 IT 201900009372
(43) Date of publication of application: 23.12.2020
(73) Proprietor: ITEMA S.p.A., 24020 Colzate (BG) (IT)
(72) Inventor: MINELLI, Lorenzo, 24020 Colzate BG (IT); LUZZANA, Andrea, 24020 Colzate BG (IT)
(74) Representative: Faggioni, Marco

(56) References cited:
- EP-A1- 0 341 522
- EP-A1- 0 533 046

## Description

### FIELD OF THE INVENTION

The present invention is related to a weaving loom comprising an optical device for monitoring the wear condition of the flexible straps driving the two grippers which, in gripper weaving looms, provide to the weft insertion, in the following simply indicated as "gripper strap". In particular, the invention relates to a control device continuously monitoring the wear condition of the gripper straps, and sending a warning signal to the central control system of the loom before the wear of the gripper straps reaches such an extent to endanger its mechanical strength.

The present invention is also related to an automatic control method of said weaving loom.

### STATE OF THE BACKGROUND ART

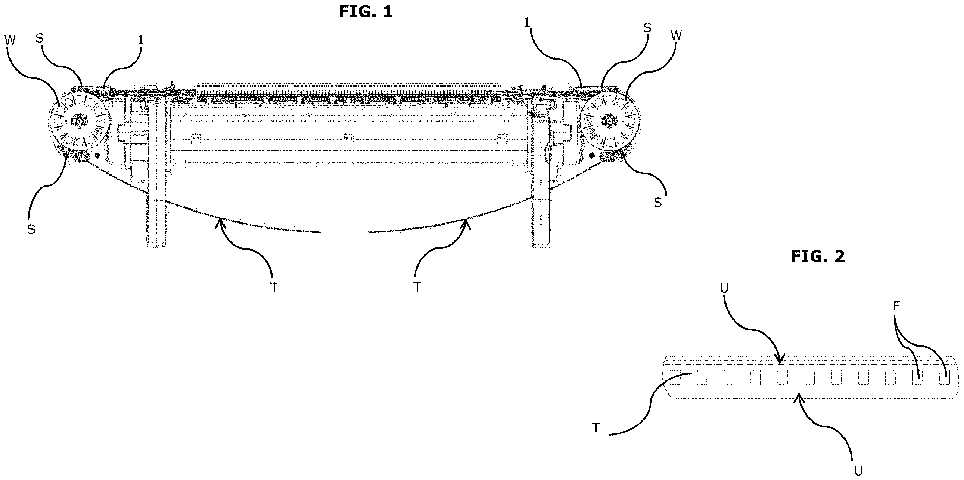

As is known to those skilled in the art and as schematically shown in fig. 1, in gripper weaving looms the alternating movement of the carrying gripper and of the drawing gripper, to insert the weft into the shed formed by the warp yarns, is controlled by means of two flexible gripper straps T at one end of which is fixed a carrying gripper or, respectively, a drawing gripper. The alternating movement to each one of the two gripper straps is given by a respective toothed wheel W, whose teeth engage on a continuous series of eyelets F formed along a central portion of the gripper strap T. Therefore, during operation, the gripper strap T behaves like a flexible rack controlled by a toothed wheel; as a matter of fact, a pair of metallic guide slides S force the gripper strap T to flex in adherence around a sector of the toothed wheel W, said sector being wide enough to transmit the movement to the strap T without creating excessively high local stresses on the eyelets F and to direct the gripper strap T in an area below the loom when the grippers are in a position outside the shed.

As the strap is inclined to maintain its original rectilinear shape, the deformation thereof around the toothed wheel W, by the guide slides S, causes a continuous dragging friction between the surface of the guide slides S and the outer surface of the strap T. Then, further friction phenomena occur between the lateral edges of the gripper strap T and metal guide hooks arranged along the shed which allow the gripper strap T to be brought back and maintained in its straight shape, driving it in the desired direction through the shed. The friction arising by the fast dragging of the gripper strap T in the guide slides S and in the guide hooks causes a progressive wear of the surface of the gripper strap T until it becomes no longer usable in safety conditions.

The flexible gripper straps are in fact made by laminating several layers of different materials in terms of composition and function. The gripper strap surface subjected to friction, and consequently to wear phenomena, is the outermost one, consisting of a layer of plastic material (for example, polyamide) added with a PTFE-based filler to reduce the friction coefficient. Immediately below this outermost layer, there are the additional layers that form the structure of the gripper strap and determine its mechanical features such as flexibility, dimensional stability, and strength. When the said outermost layer is completely worn out, the friction coefficient of the gripper strap increases sharply, thus considerably accelerating the wear phenomenon and making it necessary to replace the gripper strap in a short time.

However, the wear of the gripper strap is not a regular phenomenon, since it is conditioned by several concurrent factors, which together determine its rate, including:
- loom operating speed;
- working temperature;
- clearance between gripper strap and guide slides;
- incorrect assembly of the gripper strap;
- incorrect loom adjustments.

Therefore, to forecast the best time for replacing the gripper strap is currently a quite ticklish operation that requires the intervention of a specialized textile worker who knows how to correctly evaluate the remaining useful lifespan of the gripper strap based on its external appearance. As a matter of fact, a premature replacement of the gripper strap obviously leads to a waste of resources and an economic damage, while the prolonged use of a gripper strap that is already excessively worn out entails serious risks of gripper strap failure, with consequent possible damage to the textile article being processed, and to the same members of the weaving loom.

EP-0.341.522 discloses a system for controlling the wear of the gripper straps, wherein each strap is provided with internal layers or inserts distributed throughout the thickness of the strap and arranged along the length of the strap, suitable for providing optical, electrical, or magnetic signals indicating the wear condition of the straps in response to the action of suitable detectors, .

The problem tackled by the present invention is therefore that of automating the evaluation of the actual wear conditions of the gripper strap, making this evaluation process independent of a predefined internal strap structure, with the aim, on the one hand, to optimize the complete use of the gripper straps avoiding excessively anticipated replacements thereof and, on the other hand, to avoid any risk of undesirable gripper strap failure during weaving operations.

While addressing this problem, a first object of the invention is to define a technique for detecting the wear condition of the gripper straps on the basis of which it is possible to evaluate effectively and continuously the condition of progressive wear of the gripper straps, which detection should not be influenced by the unpredictable variables due to the intrinsic nature of the individual gripper straps used and the possible surface modifications thereof that may occur during weaving operations such as, for example, a different coloration of the gripper strap resulting from a colour transfer by the processed yarns.

A second object of the invention is then to provide a device for monitoring the wear condition of the gripper straps which can be installed on the loom without creating additional bulk and without being influenced by variable external conditions of the weaving environment, such as for example light and dust.

Finally, a third object of the invention is to integrate said device for monitoring the wear condition of the gripper straps in the general control system of the loom, in order to be able to use the wear condition detected on the gripper strap to directly act on the working conditions of loom, typically lowering the operating speed, so as to make safe the weaving operation in progress while waiting for the replacement of a worn gripper strap.

### SUMMARY OF THE INVENTION

This problem is solved, and these objects are achieved by means of a gripper weaving loom comprising a device for monitoring the wear condition of the gripper straps having the features defined in claim 1. Other preferred features of said device for monitoring the wear condition of the gripper straps are defined in the dependent claims.

### BRIEF DESCRIPTION OF THE DRAWINGS

Further features and advantages of the weaving loom comprising a device for monitoring the wear condition of the gripper straps according to the present invention will become clearer from the following detailed description of a preferred embodiment thereof, provided purely by way of a non-limiting example and illustrated in the appended drawings, in which:
Fig. 1 is a schematic front view of a gripper weaving loom showing the essential elements of the weft insertion system described in the introductory part of the present description;
Fig. 2 is a plan view of a portion of a gripper strap;
Fig. 3 is a top perspective view of an optical detector of the upper surface of the gripper strap which is part of the device for monitoring the wear condition of the gripper straps according to the present invention;
Fig. 4 is a bottom plan view of the optical detector of Fig. 3; and
Fig. 5 is a block diagram showing the electronic infrastructure of the monitoring device of the invention.

### DETAILED DESCRIPTION OF THE PREFERRED EMBODIMENT

As a result of extensive studies by the Applicant on monitoring the wear condition of the gripper strap, ultimately it was found that the only detection technique which allows to achieve the desired object of a continuous and effective measurement of the gripper strap conditions is a detection technique based on optical measurements. As a matter of fact, these experiments evidenced that optical measurements of the reflectivity changes affecting a worn gripper strap surface with respect to an intact surface of the same gripper strap - both in terms of spectral content and intensity of the reflected radiation - allow an objective, reliable and repeatable evaluation of the wear condition of the gripper strap to be made. The optical measurements can also be performed smoothly on the moving gripper strap, thus allowing to explore a wide surface of the gripper strap subject to wear phenomena; they require limited installation bulk and lend themselves to being subsequently automatically processed to obtain optical profiles of the gripper strap - where "optical profile" means herewith an ordered series of information on the intensity of the reflected radiation detected at various wavelengths along a test surface of the gripper strap having a predetermined width and length - which the Applicant found to be significantly representative of the wear condition of the different portions of the gripper strap, in particular in a comparative analysis of an historical series of optical profiles detected on the same gripper strap. Then, these optical profiles are automatically compared, at predefined time intervals, with predefined threshold reference values of the reflected radiation, thus making it possible to automatically evaluate the most correct time to replace the worn gripper strap. Based on the results of this successful experimentation, the device for monitoring the wear condition of the gripper straps according to the present invention was conceived.

In the preferred embodiment described herein, the said monitoring device comprises two separate optical detectors 1, each of which is positioned on a respective gripper strap T, and an electronic infrastructure 10 which provides for the treatment of the electrical signal coming from said optical detectors 1. Conceptually, and also physically, said electronic infrastructure 10 comprises three distinct components: the FE front-end for the acquisition and digitization of the signal, the BE back-end for control and transmission of the signal and finally the central control unit of the loom LCU, within which the synchronization and planning of the signal acquisitions, the storage and processing of the detected optical profiles and the evaluation of the gripper strap wear condition are performed.

### Optical detectors

Each optical detector 1 comprises at least one LED light source 2 and a sensor 3, reciprocally oriented in such a way that the light emitted by the light source 2 and reflected by the surface of the gripper strap T is mostly focused on the sensor 3. According to the present invention, the optical detectors 1 are advantageously positioned adjacent to a relative guide slide S, to minimize the overall bulk. Since, as mentioned above, each gripper strap T is normally equipped with two guide slides S (Fig. 1), preferably the optical detector 1 is positioned immediately adjacent to the guide slide 8 arranged in the upper part of the loom. This position is preferred for getting an easier accessibility and because the optical detector 1 can here control the whole portion of the gripper strap T which then enters the shed, which portion is therefore the most stressed by the friction forces developed by the guide slides S, the guide hooks and the warp yarns. To further reduce the overall bulk, the optical detector 1 can also be incorporated in the upper guide slide S, so that a single device must be installed.

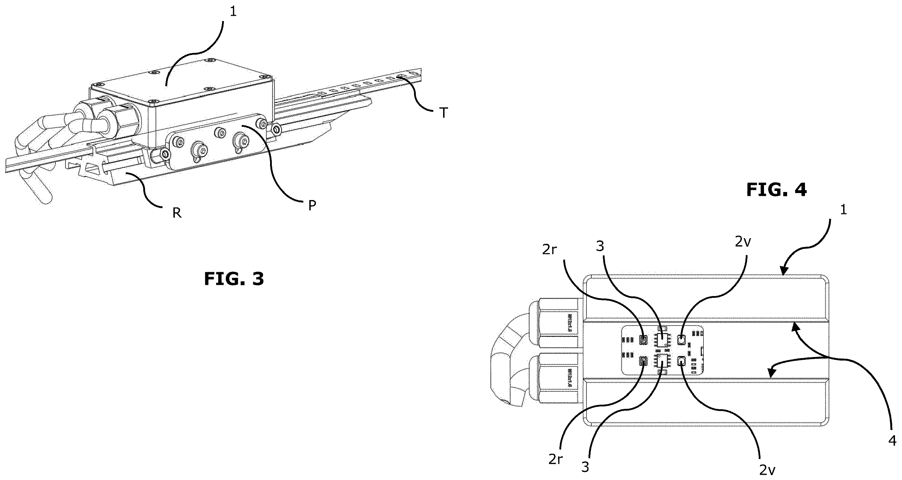

The optical detector 1 is fixed to a guide rail R of the gripper strap T by means of a fixing plate P and suitable screw means, in a way that is well known per se. The optical detector 1 comprises light sources 2 for emitting the radiation incident on the gripper strap T and sensors 3 for detecting the radiation reflected by said gripper strap T, both arranged immediately behind a window formed on the lower face of the optical detector 1, facing a channel 4 where the gripper strap T slides, and closed by a glass sheet or a sheet of another suitable transparent material with respect to the wavelengths of interest, as shown in fig. 4. Therefore, the lighting up of the gripper strap T, by the light sources 2, and the detection of the radiation reflected by the gripper strap T, by means of the sensors 3, occur at a position which is completely shielded from lighting conditions and environmental dust, by the same body of the optical detector 1.

For the light sources 2, according to the invention, LEDs with different very narrow band wavelengths are used, both in the visible radiation (RGB) range and in the infrared radiation (IR) range. The analysis of the reflected radiation of multiple radiations emitted at different wavelengths allows, in fact, to minimize interferences, for example those caused by the deposition of coloured substances on the gripper strap by the processed yarns or those deriving from the different types of gripper straps existing on the market or colour variants for the same type of gripper strap; the consequent colour change of the gripper strap, in fact, will only interfere with the reflected radiation of some of the wavelengths used for the emitted radiation, while the others will remain unchanged and based on them it will always be possible to elaborate a significant optical profile, on which then conduct the analysis of the wear condition of the gripper strap T.

As already mentioned in the introductory part, the wear of the gripper strap T occurs on its entire upper surface due to the friction with the guide slides S, on both the upper and lower gripper strap surfaces due to the friction with the warp yarns, and mainly on the side edges of the gripper strap due to the friction with the guide hooks inside the shed. Therefore, the side areas U of the upper surface of the gripper strap T, adjacent to the eyelets F, are undoubtedly those which are more exposed to wear. Due to this reason, the optical analysis of the wear condition is carried out according to the invention precisely at the said areas U and therefore, in order to simultaneously monitor both these areas, in a preferred embodiment thereof illustrated in the drawings, the optical detector 1 is provided with a pair of sensors 3 arranged precisely in correspondence with the aforementioned side areas U of the gripper strap (schematically represented by dashed and dotted lines in Fig. 2), each of which is coupled to two respective light sources 2, i.e. infrared LEDs 2r that emit infrared radiation and visible LEDs 2v that emit visible radiation in the three fundamentals colours of the RGB colour model. Both the infrared LEDs 2r and the visible LEDs 2v are mounted in the optical detector 1 with such an orientation to direct most of the radiation reflected by the gripper strap T in the direction of the respective sensor 3.

Therefore, the optical detector 1 lights up the gripper strap T through each of the light sources 2 at predefined time intervals, in corresponding separate runs of the gripper strap T, and acquires the intensity of the radiation reflected by the gripper strap T by means of the sensors 3. From this data, a complete optical profile of the reflection intensity along the gripper strap is extracted and stored, said optical profile comprising all the four radiation frequencies emitted by the light sources 2. as a matter of fact, the Applicant has experimentally found that any possible worn section of the gripper strap, due to their different reflectance, causes a recognizable alteration of the reflected radiation, localized at well-defined positions of the optical profile. These positions are then matched by equally well-defined areas of the gripper strap T, thanks to the fact that the process for acquiring the radiation reflected by the gripper strap T is accurately synchronized with the movement of the loom.

In general, the analysis of the wear condition of the gripper strap T is divided into the following phases:
1. Acquisition and storage of an initial reference optical profile, with respect to a new gripper strap T or to a gripper strap T devoid of any significant signs of wear;
2. Acquisition at regular time intervals of the optical profile of the length of gripper strap T subjected to optical detection;
3. Comparison between the values of the current optical profile corresponding to areas of the gripper strap subject to different wear conditions;
4. Comparison of the current optical profile with the initial optical reference profile and with the historical series of the previously acquired optical profiles;
5. Evaluation of the average wear status of the T gripper strap in use;
6. Identification of any areas of the gripper strap T that show wear conditions differing from the average wear condition due to localized wear.

### Electronic infrastructure for optical signal processing

### Front end

The front-end FE is installed in duplicate on two identical electronic boards associated with the two optical detectors 1, as described above. Each front-end FE includes the following functions.

### Gripper strap lighting up

The gripper strap T is lighted up by a pair of light sources 2 formed by an RGB LED and an IR LED for each sensor 3. The relative positioning between the sensor 3 and the light sources 2 is such as to maximize the convergence on the sensor 3 of the radiation reflected by the gripper strap T and, consequently, the system sensitivity. Due to the same reason, the wavelengths of the radiation emitted by the light sources 2 are chosen at the sensitivity peaks of the sensor 3. Due to the above described position of the light sources 2 and of the sensors 3, the body of the optical detector 1 prevents the ambient light from reaching the gripper strap T altering the reading of the sensor 3, which allows avoiding burdensome modulation and filtering techniques of the reflected radiation.

### Acquisition and digitization of the radiation reflected by the gripper strap T

As sensors 3, analog phototransistors or photodiodes are preferably used, because they are characterized by a high acquisition rate of the reflected radiation; this allows in fact to carry out the detection of the reflected radiation during normal weaving conditions and therefore without the need to interrupt the processing or wait for a stop of the loom. Of course, it is possible to also use digital sensors, which however normally offer quite a much lower acquisition rate; in this case, therefore, the detection of the reflected radiation must be carried out during a production stop and by making the loom move at low speed, in the so-called "slow motion weaving" function.

The intensity of the reflected radiation is detected by the sensors 3 and directly converted by the same into amplified analog electrical signals, already suitable for being digitized in an analog-digital converter. The selection of the channel to be converted, the conversion rate and the sequence of the channels are entirely managed by the back-end.

### Transmitting the digital signals to the back-end

The digitized signals are sent to the back-end through a high-speed serial interface on a differential channel to improve immunity from disturbances.

### Back end

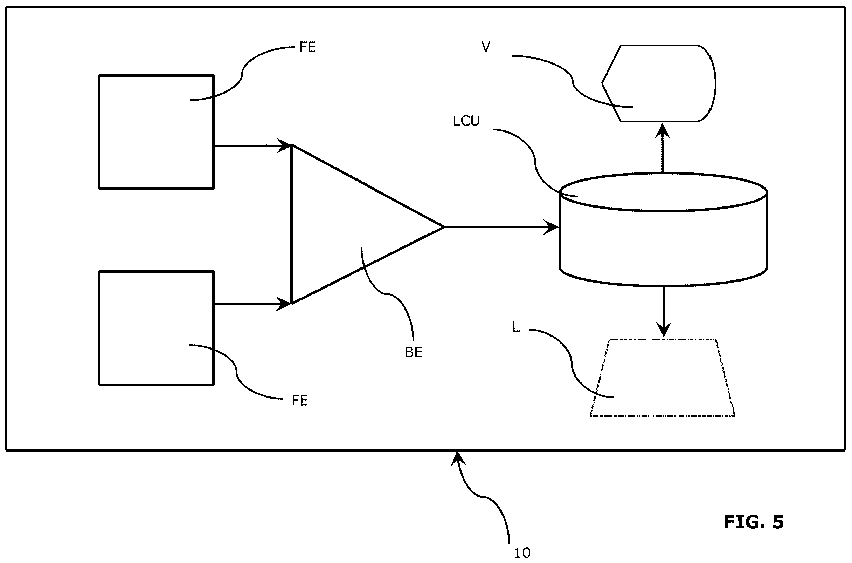

The back-end BE is installed on a single electronic board. This board is wired, on the one hand, to the two electronic front-end FE boards and, on the other hand, to the central control unit of the loom LCU (fig. 5). The back-end BE includes the functions indicated below.

### LED lighting adjustment and other front-end controls

The power supply of the light-emitting diodes forming the light sources 2r and 2v is at constant current, said constant current being modulated at a different specific value for each of the four emitted wavelengths. This allows obtaining, for each frequency of emitted light radiation, the quantity of light necessary to compensate for the non-linearity of the sensitivity of the sensor 3, at different wavelengths of the incident light, so as to obtain a detected signal of the reflected radiation having a constant intensity, for each same lighted up area of the gripper strap T, regardless of the wavelength of the incident light. In a similar way, the aforementioned modulation of the constant supply current of the LEDs enables to simultaneously compensate for the non-linearity of the different types of LEDs, as far as regards the emitted-light intensity/power-supply current ratio.

Within certain limits, the modulation of the power supply constant current also makes it possible to compensate, as will be more fully explained below, for the decrease of the detected signal caused by the accumulation of dust on the transparent window protecting the light sources 2 and the sensors 3.

The back-end also controls the other front-end FE functions and, in particular, the management of the analog-digital converter.

### Receiving digital signals from the front-end and transmitting these signals to the central control unit of the loom

The differential signal coming from the two front-ends FE, which represents the intensity of the radiation reflected along the swept area of the two gripper straps T, is converted in common-mode and supplied as input to a DSP of the back-end BE for the subsequent transmission to the central control unit of the loom LCU.

The back-end BE acquires in a buffer memory this data sequence at a high transmission rate (bitrate), substantially corresponding to the acquisition rate; the last acquired sequence of data is then kept transitorily available to the central control unit of the loom LCU until the acquisition of the next sequence, carried out with a different light source 2.

This delay allows to optimize the transmission speed of the communication between the back-end BE and the central control unit of the loom LCU at a value much lower than the acquisition rate by the sensors 3 of the data of the radiation reflected by the gripper strap T, thus avoiding unnecessarily jamming the communication channels towards said central control unit of the loom LCU, while maintaining intact the originally detected data sequence, without the need to perform subsampling or decimation. The transmission takes place with serialized data, sent through a special protocol and through a high-speed serial interface on a differential channel to improve its immunity from disturbances.

Once the transmission of the data sequence to the central control unit of the loom has been completed, the buffer memory is emptied and the DSP of the BE back-end is ready to receive a new acquisition carried out with a different light source 2.

### Central loom control unit

A special software module is integrated in the software of the central control unit of the loom LCU to process the data obtained from the back-end BE and finally to evaluate the gripper strap wear condition. The main functions of this software module are the following.

### Angular synchronisation of the acquisitions

The data acquisition from the front-end FE is synchronized with the angular position of the loom, first of all in order to limit the acquisition to the only period of the weft insertion cycle in which the gripper strap T is actually moving under the sensor 3 and to the only area of the gripper strap on which there is interest to perform the detection. Furthermore, a high coherence of the synchronization among successive different acquisitions is also fundamental both in order to have a precise biunivocal correspondence of the data detected with the different swept areas of the gripper strap T and to be able to make a significant comparison between the optical profiles of the gripper strap T acquired in subsequent time periods.

### Planning the acquisitions

The frequency of data acquisitions for each side of the loom, and therefore for each of the two gripper straps T, and also the sequence of the wavelengths to be used for lighting up the gripper straps T in each of said acquisitions are defined by a program. By way of example, the data acquisition sequences with the various light sources 2r and 2v described above are separated by a short interval, of the order of seconds, so as to make the four acquisitions substantially concurrently with respect to the wear detection, while leaving a short time interval between two successive acquisitions for allowing the completion of the data transmission to the central control unit of the loom LCU and the emptying of the buffer memory of the back-end BE. A much greater interval, for example in the order of hours, is instead normally left between a data acquisition group and the next one, considering that wear a rather slow phenomenon.

### Creation and storage of gripper strap optical profiles and evaluation of the gripper strap wear condition

The digital data sequences, representative of the reflected radiation intensity of a group of four subsequent acquisitions at the different wavelengths indicated above, are formatted in a single optical gripper strap profile and subsequent optical profiles are stored in a memory unit in order to compare them at regular time intervals which can be adjusted at will.

The historical series of the optical profiles of each of the two gripper straps thus stored is then analysed automatically by a programmable comparison unit installed on the central control unit of the loom LCU in order to extract information on the progress of the gripper strap wear. As a matter of fact, the wear is represented by the progressive decay of the intensity of the reflected radiation, with respect to the wear condition originally detected on a new gripper strap, on at least one of the four different incident radiations, this progressive decay being detectable both on the intensity of the reflected signal (which intensity decreases as the depth of wear increases) and on the extent , both in width and length, of the gripper strap area where signs of wear appear (which extent increases as the wear progresses). This approach thus makes it possible to render the colour differences between gripper straps belonging to different lots irrelevant, since only the trend of the reflected radiation signals extracted from the same gripper strap is evaluated. As a matter of fact, based on this trend, the wear condition of the gripper strap (extension and depth of the worn area) can be automatically evaluated by said comparison unit.

### Managing user messages and loom controls

On the basis of the evaluation of the wear condition of the gripper straps with reference to predefined threshold values and, possibly, of other monitoring systems of the loom, warning messages are sent to the user through a display device V or blocking signals are directly sent to the central control unit of the loom LCU. Such warning messages can therefore for example prompt the operator to decrease the weaving speed, to replace the damaged gripper straps or to verify the mechanical adjustment thereof. In cases of serious wear, i.e. when the evaluation of the wear condition of at least one gripper strap (T) of the loom goes beyond predetermined thresh-old values the central control unit of the loom is programmed according to the automatic control method of the present invention, to impose a limitation of the weaving speed, at a first threshold, or to prevent the loom restart after the first stop for any other reason, at a second threshold, or, finally, to forcedly stop the loom operation when a third threshold is reached.

### Algorithm for evaluating the gripper strap wear condition

A possible algorithm for evaluating the wear degree of the gripper strap, which can be implemented in the software of the central control unit of the loom LCU, is now briefly described. This algorithm is shown here to better illustrate a preferred embodiment of the present invention, but it must be clear that the optical profiles of the gripper strap, as created and stored with the above disclosed devices, can certainly be further processed also by means of other algorithms, without thereby departing from the scope of protection of the present invention.

First of all, two areas are identified along the gripper strap T, and precisely an area A where the gripper strap T is subject to wear only on the edges, because it does not pass under the guide slides S or only passes there at low speed during the insertion of the gripper straps, and an area B which is the one continuously passing under the guide slides S and is therefore more subject to wear.

The radiation reflected on the two areas A and B is acquired separately, thanks to the possibility of synchronizing the acquisitions with the angular positions of the loom.

The data acquired in the area A of the gripper strap are used for:
a. modulating the intensity of the constant current which supplies the LED light sources 2r and 2v to obtain a predetermined signal level which is considered optimal;
b. defining a level of a "basic signal" of the reflected radiation in the absence of wear, which basic signal is typical of the specific gripper strap under examination and is considered as the initial reference value for that gripper strap;
c. before starting each data acquisition group, compensating for the afore-mentioned non-linearity in operation of the light sources 2 and of the sensors 3 and, in addition, compensating for the presence of dirt on the relative protection window and moreover also for the chromatic variations between gripper straps coming from different lots, up to obtaining the same initial reference value, as per point b. above, for the reflected radiation in this area A;
d. where it should not be possible to achieve this initial reference value of the reflected radiation through compensation, sending an error message to the operator for cleaning the protection sheet of the light sources 2 and of the sensors 3 and/or for checking the correct operation of the optical detector 1;

The data acquired in the area B of the gripper strap are instead used for:
e. evaluating deviations from the above-said initial reference value determined in step c. above, on the area A of the gripper strap, which deviations, if present, are ascribed to wear;
f. evaluating the trend of the wear condition through a comparison on the historical series of corresponding portions of the stored optical profiles previously acquired in said area B;
g. comparing the wear extent in terms of depth, size and trend with suitable threshold values in order to send warning messages to the user, or to lower the loom speed, to inhibit the restart of the loom L or to halt the same immediately.

From the above description it is clear how the present invention has fully achieved the proposed objects. First of all, in fact, the forecasting effectiveness of a monitoring of the wear of the gripper straps by optical detection has been experimentally confirmed, proposing an optical detection of the reflected radiation which uses different frequencies of light radiation emitted on areas of the gripper strap characterized by different degree of wear, thus eliminating the interference on the detection deriving from different surface colours of the gripper straps, both originally given in the manufacture and later assumed as a result of weaving process.

A special location of the optical detectors 1 was then identified, which is particularly effective both for avoiding any additional bulk on the loom and for perfectly shielding the optical sensors from the influence of ambient light and dust.

Finally, the monitoring device of the present invention is perfectly integrated in the central control unit of the loom LCU, by means of a special software module, so as to exploit the resources of this unit for storing and processing the collected data and also allowing that the warning messages are simply displayed to the operator or directly affect the operation of the loom.

It is understood, however, that the invention should not be construed as limited to the particular arrangements illustrated above, which only form exemplary embodiments thereof, and that several variants are possible, all within the skill of a person ordinarily skilled in the art, without thereby departing from the protection scope of the invention, which is only defined by the following claims.

## Claims

1. Gripper weaving loom comprising a weft insertion system wherein a carrying gripper and a drawing gripper are driven with alternate motion, inside the shed formed by the warp yarns, by a pair of toothed wheels (W) by means of corresponding flexible gripper straps (T) which bear at one end said carrying gripper and, respectively, said drawing gripper, said gripper straps (T) are meshed with said toothed wheels (W) through a series of eyelets formed longitudinally in the body of the gripper straps (T) and are kept adhering to a sector of said wheels (W) by means of guide slides (S), said system being controlled by a central control unit of the loom (LCU), said loom furthermore comprising an optical monitoring device for monitoring the wear condition of at least one of said gripper straps (T) consisting of at least one light source (2) having a predetermined wavelength and emitting a light radiation towards the surface of said gripper strap (T), while the gripper strap is in motion, at least one sensor (3) which detects the intensity of the light radiation reflected by said gripper strap (T) during the movement thereof and emits a corresponding series of electric signals,
**characterized in that** it further comprises an acquisition and buffer memory device which acquires said series of electric signals and transmits them, converted into digital signals, to said central control unit of the loom (LCU), a memory unit wherein said digital signals are stored as an historical series of optical profiles of the gripper strap at said wavelength at subsequent times, and a comparison unit which compares the latest optical profile processed with the historical series of stored optical profiles and provides an evaluation of the progressive wear condition of said gripper strap (T).

2. Gripper weaving loom as in claim 1, wherein said optical monitoring device comprises two optical detectors (1), each one positioned on a respective gripper strap (T), and an electronic infrastructure (10) wherein the electric signals coming from said optical detectors (1) are processed.

3. Gripper weaving loom as in claim 2, wherein the optical detectors (1) are arranged adjacent to said guide slides (S) and comprise each at least one LED light source (2) and one analog sensor (3), mutually oriented so that the major portion of the light emitted by the light source (2) and reflected by the surface of the gripper strap (T) converges onto the analog sensor (3).

4. Gripper weaving loom as in claim 3, wherein said LED light sources (2) and analog sensors (3) are arranged within said optical detectors (1) behind a window formed on the lower face of the optical detectors (1), facing a channel (4) where the gripper strap (T) slides, and closed by a sheet of glass or of any other suitable material transparent to the wavelengths of said emitted and reflected light radiations.

5. Gripper weaving loom as in any one of claims from 2 to 4, wherein said LED light sources (2) are at least one LED light source of the IR type (2r) which emits an infrared light radiation and a LED light source of the RGB type (2v) which emits a radiation visible in the three main colours of the RGB colour model and each of said optical profiles contains a complete and coordinated series of the intensity values of the reflected radiation for each of said emitted radiations.

6. Gripper weaving loom as in claim 5, wherein each of said optical detectors (1) comprises two analog sensors (3) arranged in correspondence of the lateral areas (U) in the gripper strap (T), each of which is coupled with two respective light sources (2r, 2v) consisting of LED of the IR type and of the RGB type.

7. Gripper weaving loom as in any one of the preceding claims from 1 to 6, wherein said sensor (3) is an analog sensor and said gripper strap (T) is moving at the standard operating speed of the loom.

8. Gripper weaving loom as in any one of the preceding claims from 1 to 6, wherein said sensor (3) is a digital sensor and said gripper strap (T) is moving at a reduced speed (slow motion weaving).

9. Gripper weaving loom as in claim 1, wherein said storage unit and said comparison unit are comprised within said central control unit of the loom (LCU).

10. Gripper weaving loom as in claim 2, wherein said electronic infra-structure comprises a front-end (FE), a back-end (BE) and the central control unit (LCU) of the loom.

11. Gripper weaving loom as in claim 10, wherein said front-end (FE) comprises the functions of:
a. lighting up the gripper strap (T) by means of the light sources (2) radiation;
b. acquisition of the radiation reflected by the gripper strap (T) by means of the sensors (3), as analog signals;
c. conversion of said analog signals corresponding to the reflected radiation into digital signals;
d. transmission of the digital signals to the back-end (BE).

12. Gripper weaving loom as in 10, wherein said back-end (BE) comprises the functions of:
a. adjustment of the lighting level of the light sources (2);
b. management of the analog/digital converter;
c. high-speed reception of the digital signals coming from the front-end (FE);
d. acquisition and buffer storage of said digital signals;
e. low-speed transmission of the digital signals to the central control unit of the loom (LCU).

13. Gripper weaving loom as in claim 7, wherein said central control unit of the loom (LCU) comprises the functions of:
a. angular synchronisation of the acquisitions;
b. planning the acquisitions;
c. creation and storage of the optical profiles of the gripper strap and of a historical series thereof;
d. comparation of the latest acquired gripper strap profile against said historical series of stored gripper strap profiles and evaluation of the progressive wear condition of the gripper strap;
e. management of user messages and loom controls.

14. Gripper weaving loom as in any one of the preceding claims, further comprising a message display device (V) wherein messages about the evaluation of the wear condition of said gripper strap (T) are shown.

15. Gripper weaving loom as in any one of the preceding claims, wherein the reflected radiation is detected on two areas of the gripper strap at a different wear level and wherein:
the data acquired in the area (A) of the gripper strap having a low wear level are used for:
a. modulating the intensity of the constant current which supplies the LED light sources (2r) and (2v) in order to obtain an optimal signal level;
b. defining a level of a "basic signal" of the reflected radiation in the absence of wear, which basic signal is typical of the specific gripper strap under examination and which makes up the initial reference value for that gripper strap;
c. before starting each data acquisition group, modulating the intensity of constant current which supplies the LED light sources (2r) and (2v) until obtaining the same initial reference value as in step b. above, for the reflected radiation in this area (A);
d. should it not be possible to achieve such initial reference value of the reflected radiation as in step c. above, sending an error message to the display device (V) which shows the need to:
i. cleaning the protection sheet of the light sources (2) and of the sensors 3; and/or
ii. checking the correct operation of the optical detector (1);
while the data acquired in the area (B) of the gripper strap having a high wear level are instead used for:
e. evaluating deviations from the above said initial reference value determined in step c. above, on the area (A) of the gripper strap having a low wear level;
f. evaluating the trend of the wear condition through a comparison on the historical series of corresponding portions of the stored optical profiles previously acquired in said area (B) of the gripper strap having a high wear level;
g. comparing the wear extent in terms of depth, size and trend with suitable threshold values in order to send warning messages to the user, or to lower the loom (L) speed, to inhibit the restart thereof or to halt the same immediately.

16. Automatic control method of a weaving loom as in any one of the preceding claims, wherein when the evaluation of the wear condition of at least one gripper strap (T) of the loom goes beyond a first predetermined threshold value, the loom (L) speed is reduced to a predetermined value.

17. Automatic control method of a weaving loom as in claim 16, wherein when the evaluation of the wear condition of at least one gripper strap (T) of the loom goes beyond a second predetermined threshold value, the restart of the loom (L) is prevented after a first halt thereof.

18. Automatic control method of a weaving loom as in claim 16, wherein when the evaluation of the wear condition of at least one gripper strap (T) of the loom goes beyond a third predetermined threshold value, the operation of the loom (L) is halted.

## Patentansprüche

1. Greiferwebmaschine mit einem Schußeintragssystem, bei dem ein Traggreifer und ein Ziehgreifer mit abwechselnder Bewegung im Inneren des von den Kettfäden gebildeten Fachs durch ein Paar Zahnräder (W) mittels entsprechender flexibler Greiferbänder (T), die an einem Ende den Traggreifer bzw. den Ziehgreifer tragen, angetrieben sind, wobei die Greiferbänder (T) mit den Zahnrädern (W) durch eine Reihe von Ösen ineinandergreifen, die in Längsrichtung in dem Körper der Greiferbänder (T) ausgebildet sind und an einem Sektor der Zahnräder (W) durch Führungsschlitten (S) gehalten werden, wobei das System von einer zentralen Steuereinheit der Webmaschine (LCU) gesteuert wird, wobei die Webmaschine außerdem eine optische Überwachungseinrichtung zum Überwachen des Verschleißzustands von mindestens einem der Greiferbänder (T) umfasst, bestehend aus mindestens einer Lichtquelle (2), die eine vorbestimmte Wellenlänge hat und eine Lichtstrahlung auf die Oberfläche des Greiferbandes (T) aussendet, während das Greiferband in Bewegung ist, mindestens einem Sensor (3), der die Intensität der von dem Greiferband (T) reflektierten Lichtstrahlung während der Bewegung desselben erfasst und eine entsprechende Reihe elektrischer Signale abgibt, **dadurch gekennzeichnet, dass** sie außerdem eine Erfassungs- und Pufferspeichervorrichtung umfasst, die die Reihe von elektrischen Signalen erfasst und sie, in digitale Signale umgewandelt, an die zentrale Steuereinheit der Webmaschine (LCU) überträgt, eine Speichereinheit, in der die digitalen Signale als eine historische Reihe von optischen Profilen des Greiferbandes bei der genannten Wellenlänge zu aufeinander folgenden Zeiten gespeichert werden, und eine Vergleichseinheit, die das letzte verarbeitete optische Profil mit der historischen Reihe von gespeicherten optischen Profilen vergleicht und eine Bewertung des fortschreitenden Verschleißzustandes des Greiferbandes (T) liefert.

2. Greiferwebmaschine nach Anspruch 1, wobei die optische Überwachungseinrichtung zwei optische Detektoren (1) umfasst, von denen jeder an einem jeweiligen Greiferband (T) angeordnet ist, und eine elektronische Infrastruktur (10), in der die von den optischen Detektoren (1) kommenden elektrischen Signale verarbeitet werden.

3. Greiferwebmaschine nach Anspruch 2, wobei die optischen Detektoren (1) neben den Führungsschlitten (S) angeordnet sind und jeweils mindestens eine LED-Lichtquelle (2) und einen analogen Sensor (3) umfassen, die in Bezug zueinander so ausgerichtet sind, dass der größte Teil des Lichtes, das von der Lichtquelle (2) emittiert und von der Oberfläche des Greiferbandes (T) reflektiert wird, auf den analogen Sensor (3) trifft.

4. Greiferwebmaschine nach Anspruch 3, wobei die LED-Lichtquellen (2) und die analogen Sensoren (3) innerhalb der optischen Detektoren (1) hinter einem Fenster angeordnet sind, das auf der Unterseite der optischen Detektoren (1) angeordnet ist und einem Kanal (4) zugewandt ist, in dem das Greiferband (T) gleitet, und durch eine Scheibe aus Glas oder aus einem anderen geeigneten Material, das für die Wellenlängen der emittierten und reflektierten Lichtstrahlen durchlässig ist, geschlossen ist.

5. Greiferwebmaschine nach einem der Ansprüche 2 bis 4, wobei die LED-Lichtquellen (2) mindestens eine LED-Lichtquelle des IR-Typs (2r) sind, die eine Infrarot-Lichtstrahlung emittiert, und eine LED-Lichtquelle des RGB-Typs (2v), die eine Strahlung aussendet, die in den drei Hauptfarben des RGB-Farbmodells sichtbar ist, und jedes der genannten optischen Profile eine vollständige und koordinierte Reihe von Intensitätswerten der reflektierten Strahlung für jede der genannten emittierten Strahlungen enthält.

6. Greiferwebmaschine nach Anspruch 5, wobei jeder der optischen Detektoren (1) zwei analoge Sensoren (3) aufweist, die entsprechend den seitlichen Bereichen (U) des Greiferbandes (T) angeordnet sind, von denen jeder mit zwei entsprechenden Lichtquellen (2r, 2v) gekoppelt ist, die aus LED des IR-Typs und des RGB-Typs bestehen.

7. Greiferwebmaschine nach einem der vorhergehenden Ansprüche von 1 bis 6, wobei der Sensor (3) ein analoger Sensor ist und das Greiferband (T) sich mit der Standardbetriebsgeschwindigkeit der Webmaschine bewegt.

8. Greiferwebmaschine nach einem der vorangehenden Ansprüche von 1 bis 6, wobei der Sensor (3) ein digitaler Sensor ist und das Greiferband (T) sich mit einer reduzierten Geschwindigkeit bewegt (Zeitlupenweben).

9. Greiferwebmaschine nach Anspruch 1, wobei die Speichereinheit und die Vergleichseinheit innerhalb der zentralen Steuereinheit der Webmaschine (LCU) enthalten sind.

10. Greiferwebmaschine nach Anspruch 2, wobei die elektronische Infrastruktur ein Front-End (FE), ein Back-End (BE) und die zentrale Steuereinheit (LCU) der Webmaschine umfasst.

11. Greiferwebmaschine nach Anspruch 10, wobei das Front-End (FE) die folgenden Funktionen umfasst:
a. Beleuchten des Greiferbandes (T) mittels der Strahlung der Lichtquellen (2);
b. Erfassen der von dem Greiferband (T) reflektierten Strahlung mittels der Sensoren (3) als analoge Signale;
c. Umwandeln der genannten analogen Signale, die der reflektierten Strahlung entsprechen, in digitale Signale;
d. Übertragen der digitalen Signale an das Back-End (BE).

12. Greiferwebmaschine nach Anspruch 10, wobei das Back-End (BE) die Funktionen umfasst:
a. Einstellung der Beleuchtungsstärke der Lichtquellen (2);
b. Verwaltung des Analog/Digital-Wandlers;
c. Hochgeschwindigkeitsempfang der digitalen Signale, die von dem Front-End (FE) kommen;
d. Erfassung und Pufferspeicherung der digitalen Signale;
e. Übertragung der digitalen Signale mit niedriger Geschwindigkeit an die zentrale Steuereinheit der Webmaschine (LCU).

13. Greiferwebmaschine nach Anspruch 7, wobei die zentrale Steuereinheit der Webmaschine (LCU) die folgenden Funktionen umfasst:
a. Winkelsynchronisation der Erfassungen;
b. Planung der Erfassungen;
c. Erstellung und Speicherung der optischen Profile des Greiferbandes und einer historischen Reihe davon;
d. Vergleich des zuletzt erfassten Greiferbandprofils mit der historischen Reihe der gespeicherten Greiferbandprofile und Auswertung des fortschreitenden Verschleißzustandes des Greiferbandes;
e. Verwaltung von Benutzermeldungen und Webmaschinensteuerungen.

14. Greiferwebmaschine nach einem der vorhergehenden Ansprüche, ferner umfassend eine Meldungsanzeigevorrichtung (V), in der Meldungen über die Auswertung des Verschleißzustandes des Greiferbands (T) angezeigt werden.

15. Greiferwebmaschine nach einem der vorhergehenden Ansprüche, wobei die reflektierte Strahlung an zwei Bereichen des Greiferbandes mit unterschiedlichem Verschleißgrad erfasst wird und wobei die in dem Bereich (A) des Greiferbandes mit geringem Verschleiß erfassten Daten verwendet werden für:
a. die Modulation der Intensität des konstanten Stroms, der die LED-Lichtquellen (2r) und (2v) versorgt, um einen optimalen Signalpegel zu erhalten;
b. die Festlegung eines Pegels eines "Basissignals" der reflektierten Strahlung in Abwesenheit von Verschleiß, wobei dieses Basissignal typisch für das untersuchte spezifische Greiferband ist und den anfänglichen Referenzwert für dieses Greiferband bildet;
c. die Modulation, vor dem Start jeder Datenerfassungsgruppe, der Intensität des konstanten Stroms, der die LED-Lichtquellen (2r) und (2v) versorgt, bis man den gleichen Referenzwert wie in Schritt b. oben für die reflektierte Strahlung in diesem Bereich (A) erhält;
d. Senden, falls es nicht möglich sein sollte, einen solchen anfänglichen Referenzwert für die reflektierte Strahlung wie in Schritt c. oben zu erzielen, einer Fehlermeldung an die Anzeigevorrichtung (V), die die Notwendigkeit anzeigt, um:
i. die Schutzfolie der Lichtquellen (2) und der Sensoren 3 zu reinigen; und/oder
ii. den korrekten Betrieb des optischen Detektors (1) zu prüfen;
während die Daten, die im Bereich (B) des Greiferbands, in dem ein hoher Verschleißgrad besteht, stattdessen verwendet werden für:
e. Auswerten von Abweichungen von dem ursprünglichen Referenzwert, der im obigen Schritt c. bestimmt wurde, in dem Bereich (A) des Greiferbandes mit geringem Verschleißgrad;
f. Auswerten des Trends des Verschleißzustandes durch einen Vergleich mit der historischen Serie der entsprechenden Abschnitte der gespeicherten optischen Profile, die zuvor in dem Bereich (B) des Greiferbands mit einem hohen Verschleißgrad erfasst worden sind;
g. Vergleichen des Verschleißgrades in Bezug auf Tiefe, Größe und Trend mit geeigneten Schwellenwerten, um Warnmeldungen an den Benutzer zu senden, oder um die Geschwindigkeit der Webmaschine (L) zu senken, deren Wiederanlauf zu unterbinden oder diese sofort zu stoppen.

16. Automatisches Steuerungsverfahren für eine Webmaschine nach einem der vorhergehenden Ansprüche, wobei dann, wenn bei der Auswertung des Verschleißzustandes von mindestens einem Greiferband (T) der Webmaschine ein erster vorgegebener Schwellenwert überschritten wird, die Geschwindigkeit der Webmaschine (L) auf einen vorbestimmten Wert reduziert wird.

17. Automatisches Steuerungsverfahren eine Webmaschine nach Anspruch 16, wobei dann, wenn bei der Auswertung des Verschleißzustandes von mindestens einem Greiferband (T) der Webmaschine ein zweiter vorgegebener Schwellenwert überschritten wird, das Wiederanlaufen der Webmaschine (L) nach einem ersten Stillstand der Webmaschine verhindert wird.

18. Automatisches Steuerungsverfahren einer Webmaschine nach Anspruch 16, wobei dann, wenn bei der Auswertung des Verschleißzustandes von mindestens einem Greiferband (T) der Webmaschine ein dritter vorgegebener Schwellenwert überschritten wird, der Betrieb der Webmaschine (L) angehalten wird.

## Revendications

1. Métier à tisser à griffe comprenant un système d'insertion de trame dans lequel une griffe d'acheminement et une griffe de tirage sont entraînées avec un mouvement alterné, à l'intérieur de l'ensemble formé par les fils de chaîne, par une paire de roues dentées (W) à l'aide de courroies de griffe flexibles correspondantes (T) qui portent à une extrémité ladite griffe d'acheminement et, respectivement, ladite griffe de tirage, lesdites courroies de griffe (T) sont engrenées avec lesdites roues dentées (W) par le biais d'une série d'oeillets formés longitudinalement dans le corps des courroies de griffe (T) et sont maintenues en adhérence sur un secteur desdites roues (W) à l'aide de coulisseaux de guidage (S), ledit système étant contrôlé par une unité de commande centrale du métier à tisser (LCU), ledit métier à tisser comprenant en outre un dispositif de surveillance optique destiné à surveiller l'état d'usure d'au moins l'une desdites courroies de griffe (T) composé d'au moins une source de lumière (2) ayant une longueur d'onde prédéterminée et émettant un rayonnement lumineux vers la surface de ladite courroie de griffe (T), tandis que la courroie de griffe est en mouvement, au moins un capteur (3) qui détecte l'intensité du rayonnement lumineux réfléchi par ladite courroie de griffe (T) pendant le déplacement de celle-ci et émet une série correspondante de signaux électriques,
**caractérisé en ce qu'**il comprend en outre un dispositif d'acquisition et de mémoire tampon qui acquière ladite série de signaux électriques et les transmet, convertis en signaux numériques, à ladite unité de commande centrale du métier à tisser (LCU), une unité de mémoire dans laquelle lesdits signaux numériques sont stockés sous la forme d'une série historique de profils optiques de la courroie de griffe à ladite longueur d'onde à des moments ultérieurs, et une unité de comparaison qui compare le dernier profil optique traité avec la série historique de profils optiques stockés et fournit une évaluation de l'état d'usure progressif de ladite courroie de griffe (T).

2. Métier à tisser à griffe selon la revendication 1, dans lequel ledit dispositif de surveillance optique comprend deux détecteurs optiques (1), chacun positionnés sur une courroie de griffe respective (T), et une infrastructure électronique (10) dans laquelle les signaux électriques qui proviennent desdits détecteurs optiques (1) sont traités.

3. Métier à tisser à griffe selon la revendication 2, dans lequel les détecteurs optiques (1) sont disposés de manière adjacente auxdits coulisseaux de guidage (S) et comprennent chacun au moins une source de lumière à DEL (2) et un capteur analogique (3), orientés mutuellement de sorte que la majeure partie de la lumière émise par la source de lumière (2) et réfléchie par la surface de la courroie de griffe (T) converge vers le capteur analogique (3).

4. Métier à tisser à griffe selon la revendication 3, dans lequel lesdites sources de lumière à DEL (2) et les capteurs analogiques (3) sont disposés dans lesdits détecteurs optiques (1) derrière une fenêtre formée sur la face inférieure des détecteurs optiques (1), face à un canal (4) dans lequel la courroie de griffe (T) coulisse, et fermée par une plaque de verre ou de tout autre matériau adapté transparent aux longueurs d'onde desdits rayonnements lumineux émis et réfléchis.

5. Métier à tisser à griffe selon l'une quelconque revendications 2 à 4, dans lequel lesdites sources de lumière à DEL (2) sont au moins une source de lumière à DEL du type IR (2r) qui émet un rayonnement lumineux infrarouge et une source de lumière à DEL du type RVB (2v) qui émet un rayonnement visible dans les trois couleurs principales du spectre RVB et chacun desdits profils optiques contient une série complète et coordonnée de valeurs d'intensité du rayonnement réfléchi pour chacun desdits rayonnements émis.

6. Métier à tisser à griffe selon la revendication 5, dans lequel chacun desdits détecteurs optiques (1) comprend deux capteurs analogiques (3) disposés en correspondance avec les zones latérales (U) dans la courroie de griffe (T), dont chacun est couplé à deux sources de lumière respectives (2r, 2v) composées de DEL du type IR et du type RVB.

7. Métier à tisser à griffe selon l'une quelconque des revendications 1 à 6 précédentes, dans lequel ledit capteur (3) est un capteur analogique et ladite courroie de griffe (T) se déplace à la vitesse de fonctionnement standard du métier à tisser.

8. Métier à tisser à griffe selon l'une quelconque des revendications 1 à 6 précédentes, dans lequel ledit capteur (3) est un capteur numérique et ladite courroie de griffe (T) se déplace à une vitesse réduite (tissage à mouvement lent).

9. Métier à tisser à griffe selon la revendication 1, dans lequel ladite unité de stockage et ladite unité de comparaison sont comprises dans ladite unité de commande centrale du métier à tisser (LCU).

10. Métier à tisser à griffe selon la revendication 2, dans lequel ladite infrastructure électronique comprend une extrémité avant (FE), une extrémité arrière (BE) et l'unité de commande centrale (LCU) du métier à tisser.

11. Métier à tisser à griffe selon la revendication 10, dans lequel ladite extrémité avant (FE) comprend les fonctions de :
a. éclairage de la courroie de griffe (T) à l'aide du rayonnement de sources de lumière (2) ;
b. acquisition du rayonnement réfléchi par la courroie de griffe (T) à l'aide des capteurs (3), sous forme de signaux analogiques ;
c. conversion desdits signaux analogiques correspondant au rayonnement réfléchi en signaux numériques ;
d. transmission des signaux numériques à l'extrémité arrière (BE).

12. Métier à tisser à griffe selon la revendication 10, dans lequel ladite extrémité arrière (BE) comprend les fonctions de :
a. réglage du niveau d'éclairage des sources de lumière (2) ;
b. gestion du convertisseur analogique/numérique ;
c. réception à grande vitesse des signaux numériques provenant de l'extrémité avant (FE) ;
d. acquisition et stockage en tampon desdits signaux numériques ;
e. transmission à faible vitesse des signaux numériques à l'unité de commande centrale du métier à tisser (LCU).

13. Métier à tisser à griffe selon la revendication 7, dans lequel ladite unité de commande centrale du métier à tisser (LCU) comprend les fonctions de :
a. synchronisation angulaire des acquisitions ;
b. planification des acquisitions ;
c. création et stockage des profils optiques de la courroie de griffe et d'une série historique de ceux-ci ;
d. comparaison du dernier profil de courroie de griffe acquis avec ladite série historique de profils de courroie de griffe stockés et évaluation de l'état d'usure progressif de la courroie de griffe ;
e. gestion des messages d'utilisateur et des commandes du métier à tisser.

14. Métier à tisser à griffe selon l'une quelconque des revendications précédentes, comprenant en outre un dispositif d'affichage de messages (V) dans lequel les messages relatifs à l'évaluation de l'état d'usure de ladite courroie de griffe (T) sont affichés.

15. Métier à tisser à griffe selon l'une quelconque des revendications précédentes, dans lequel le rayonnement réfléchi est détecté sur deux zones de la courroie de griffe à un niveau d'usure différent, et dans lequel :
les données acquises dans la zone (A) de la courroie de griffe ayant un niveau d'usure faible sont utilisées pour :
a. moduler l'intensité du courant constant qui alimente les sources de lumière à DEL (2r) et (2v) afin d'obtenir un niveau de signal optimal ;
b. définir un niveau de « signal de base » du rayonnement réfléchi en l'absence d'usure, lequel signal de base est typique de la courroie de griffe spécifique examinée et qui constitue la valeur de référence initiale pour cette courroie de griffe ;
c. avant de lancer chaque groupe d'acquisition de données, moduler l'intensité du courant constant qui alimente les sources de lumière à DEL (2r) et (2v) jusqu'à obtenir la même valeur de référence initiale qu'à l'étape b. ci-dessus, pour le rayonnement réfléchi dans cette zone (A) ;
d. dans l'éventualité où il serait impossible d'obtenir la même valeur de référence initiale du rayonnement réfléchi qu'à l'étape c. ci-dessus, envoyer un message d'erreur au dispositif d'affichage (V) qui affiche la nécessité de :
i. nettoyer la plaque de protection des sources de lumière (2) et des capteurs (3) ; et/ou
ii. vérifier le bon fonctionnement du détecteur optique (1) ;
tandis que les données acquises dans la zone (B) de la courroie de griffe ayant un niveau d'usure élevé sont utilisées pour :
e. évaluer les écarts par rapport à ladite valeur de référence initiale ci-dessus déterminée à l'étape c. ci-dessus, dans la zone (A) de la courroie de griffe ayant un niveau d'usure faible ;
f. évaluer la tendance de l'état d'usure par une comparaison sur la série historique de parties correspondantes des profils optiques stockés préalablement acquis dans ladite zone (B) de la courroie de griffe ayant un niveau d'usure élevé ;
g. comparer l'étendue de l'usure en termes de profondeur, de taille et de tendance avec des valeurs de seuil adéquates afin d'envoyer des messages d'alerte à l'utilisateur, ou de réduire la vitesse du métier à tisser (L), afin d'empêcher le redémarrage de celui-ci ou d'arrêter celui-ci immédiatement.

16. Procédé de commande automatique d'un métier à tisser selon l'une quelconque des revendications précédentes, dans lequel, lorsque l'évaluation de l'état d'usure d'au moins une courroie de griffe (T) du métier à tisser dépasse une première valeur de seuil prédéterminée, la vitesse du métier à tisser (L) est réduite jusqu'à une valeur prédéterminée.

17. Procédé de commande automatique d'un métier à tisser selon la revendication 16, dans lequel, lorsque l'évaluation de l'état d'usure d'au moins une courroie de griffe (T) du métier à tisser dépasse une seconde valeur de seuil prédéterminée, le redémarrage du métier à tisser (L) est empêché après un premier arrêt de celui-ci.

18. Procédé de commande automatique d'un métier à tisser selon la revendication 16, dans lequel, lorsque l'évaluation de l'état d'usure d'au moins une courroie de griffe (T) du métier à tisser dépasse une troisième valeur de seuil prédéterminée, le fonctionnement du métier à tisser (L) est arrêté.
